Europäisches Patentamt

European Patent Office

Office européen des brevets

(11) Veröffentlichungsnummer: **0 008 593**
**B1**

(12) **EUROPÄISCHE PATENTSCHRIFT**

(45) Veröffentlichungstag der Patentschrift: **25.11.81**

(21) Anmeldenummer: **78101173.9**

(22) Anmeldetag: **18.10.78**

(51) Int. Cl.³: **G 05 D 23/02,**
**F 16 K 31/00, F 24 F 11/06**

(54) Thermostatische Regelanordnung.

(30) Priorität: **20.07.78 CH 7823/78**

(43) Veröffentlichungstag der Anmeldung:
**19.03.80 Patentblatt 80/6**

(45) Bekanntmachung des Hinweises auf die Patenterteilung:
**25.11.81 Patentblatt 81/47**

(84) Benannte Vertragsstaaten:
**DE FR GB NL SE**

(56) Entgegenhaltungen:
**CH - A - 410 340**
**DE - A1 - 2 616 529**
**DE - B - 1 650 275**
**DE - B2 - 2 619 413**
**DE - U - 7 708 000**
**CH - A - 275 915**
**US - A - 3 033 512**
**US - A - 3 373 801**

(73) Patentinhaber: **GEBRÜDER SULZER**
**AKTIENGESELLSCHAFT**
**Zürcherstrasse 9**
**CH-8401 Winterthur (CH)**

(72) Erfinder: **Zweifel, Peter**
**Freudenbergstrasse 1**
**CH-8625 Gossau (CH)**

(74) Vertreter: **Sparing, Nikolaus, Dipl.-Ing.**
**Rethelstrasse 123**
**D-4000 Düsseldorf 1 (DE)**

Courier Press, Leamington Spa, England.

Thermostatische Regelanordnung

Die Erfindung betrifft eine thermostatische Regelanordnung gemäss Oberbegriff des Anspruchs; derartige An ordnungen werden zur Regelung des Durchflusses durch Wärmetauscher von Raumheizungen und -kühlungen, besonders auch von Vierleiter-Klimaanlagen, eingesetzt.

Eine Anordnung der vorstehend genannten Art ist beispielsweise aus der DE—AS—26 19 413 bekannt.

Weiterhin sollen bekanntlich steigende Temperaturen in einem zu überwachenden Raum zunächst ein fortschreitendes Schliessen des Heizventils und in Sequenz dazu nach einem gewissen Totbereich, in dem beide Ventile geschlossen sind, ein stetiges Oeffnen des Kühlventils bewirken. Bei der erwähnten Konstruktion sind daher das Heiz- und das Kühlventil im konstruktiven Aufbau ihres durch die Ausdehnungsflüssigkeit beeinflussten Arbeitselementes verschieden voneinander, um den Anforderungen in Sequenz arbeitender Heiz- und Kühlventile bei steigenden Temperaturen, d.h. bei thermischer Ausdehnung der Flüssigkeit, gerecht zu werden.

Die zum Heizventil gegenläufige Bewegung des Kühlventils wird dabei durch einen Winkelhebel als Bewegungs-Umkehrvorrichtung bewirkt, während für die Sicherstellung des erwähnten Totbereichs im Kühlventil eine eigene Totzonenfeder vorgesehen ist.

Die unterschiedlichen Bauelemente in den beiden Ventilen bedingen relativ kleine Bauserien und eine vergrösserte Lagerhaltung, ganz abgesehen davon, dass die Bewegungs-Umkehrvorrichtung ein zusätzliches Bauteil darstellt, das Anlass zu Störungen geben kann.

Aufgabe der Erfindung ist es, den Konstruktiven Aufwand für die erforderliche Bewegungsumkehr zu verringern, die Fertigung der Ventile zu vereinfachen und für das Heiz- und das Kühlventil Arbeitselemente zu schaffen, die praktisch identisch sind, so dass eine rationelle Serienfertigung und eine vereinfachte Lagerhaltung ermöglicht werden.

Die Lösung dieser Aufgabe erfolgt nach der Erfindung bei einer Anordnung der eingangs genannten Art dadurch, dass Heizventil une Kühlventil abgesehen von den Rückstellfedern gleich aufgebaut sind, und dass ferner der sichrechtwinklig zur Ventilspindel bewegende Zwischenkörper eine in Bewegungsrichtung wannenartig profilierte Mantelfläche mit zwei entgegengesetzt wirkenden schrägen Steuerkanten hat, die über einen Rollkörper die Stellung des Ventilkörpers steuern, wobei der Abstand der Steuerkanten grösser als der Durchmesser des Rollkörpers ist, und der Rollkörper in axialer Richtung des Zwischenkörpers mindestens nahezu spielfrei gelagert ist.

Bei der neuen Konstruktion unterscheiden sich Heiz- und Kühlventil einschliesslich ihrer Arbeitselemente lediglich in der Stärke ihrer Rückstellfedern, wobei deren innere Durchmesser gleichgehalten sind und deren Aussendurchmesser nur geringfügig differieren. Weiterhin wird die Bewegungsumkehr in einfacher Weise durch die gegenläufig zueinander verlaufenden Steuerkanten bewirkt, ohne dass am Aufbau des Kühlventils gegenüber demjenigen des Heizventils Aenderungen vorgenommen werden müssen.

Als Rundkörper können dabei Rollen, Zylinder oder Kugeln verwendet sein; Kugeln sind dabei besonders zweckmässig, um die Reibungskräfte bei der Betätigung der Stellglieder trotz der in Verschiebungsrichtung des Zwischenkörpers spielfreien Lagerung möglichst gering zu halten.

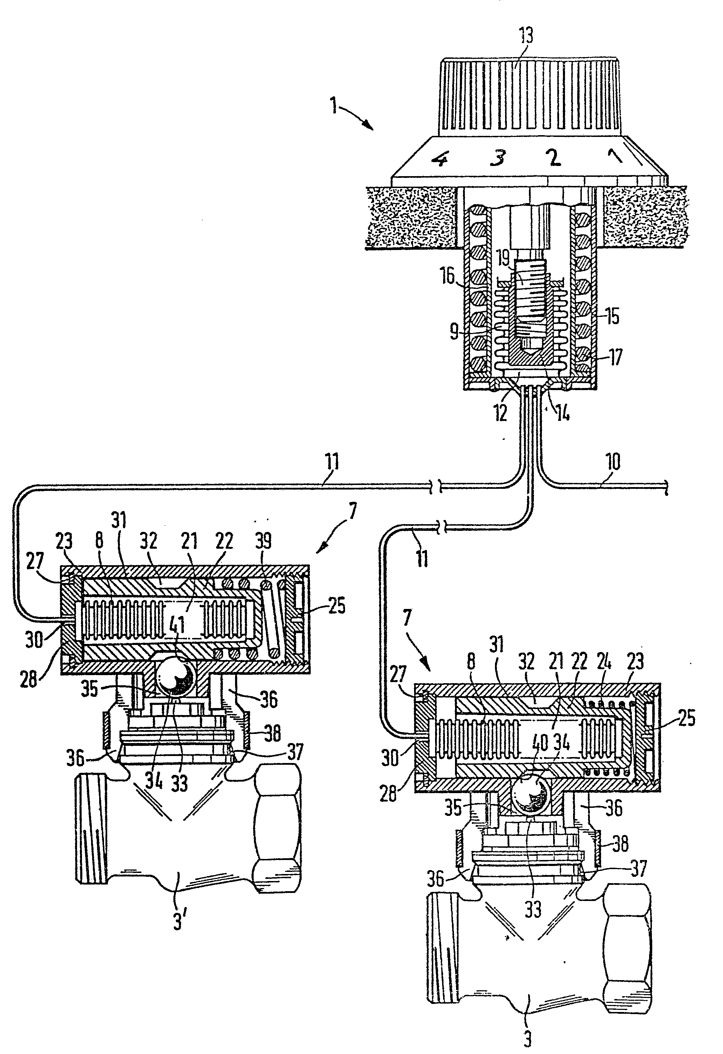

Im folgenden wird die Erfindung anhand eines Ausführungsbeispiels im Zusammenhang mit der Zeichnung näher erläutert.

Die einzige Figur zeigt schematisch eine erfindungsgemässe Anordnung für die Steuerung eines Heiz- und eines Kühlventils in einer Vierleiter-Klimaanlage, in der beide Ventile in Sequenz arbeiten.

Die thermostatische Regelanordnung dient zur Steuerung eines Heizventils 3 und in Sequenz dazu eines Kühlventils 3' einer nicht weiter dargestellten Vierleiter-Klimaanlage. Das Steuersystem der Anordnung besteht aus einer Sollwert-Einstellvorrichtung 1 und einem nicht dargestellten Temperaturfühler, die beiden Ventilen 3 und 3' gemeinsam sind, sowie je einem Arbeitselement 7 für jedes Ventil; Sollwert-Einstellvorrichtung 1, Temperaturfühler und Arbeitselemente sind durch Kapillar-Leitungen 10 und 11 untereinander verbunden und mit einer im Handel erhältlichen Ausdehnungsflüssigkeit gefüllt. Im Temperaturfühler sowie in jedem Organ 1 und 7 ist ein veränderbares Volumen vorhanden, das beispielsweise durch Metallbälge 8 und 9 realisiert ist.

In der Sollwert-Einstellvorrichtung 1 befindet sich der Balg 9, der ein veränderbares Volumen 12 besitzt; selbst bei niedrigst eingestelltem Sollwert, d.h. bei grösstmöglichem Volumen 12, steht er unter einer Vorspannung. Diese wird dem Balg 9 durch eine mit einem Verstellknopf 13 verbundene Schraubenspindel 19 aufgezwungen, mit deren Hilfe das Volumen 12 bei Aenderungen des gewünschten Sollwerts vergrössert bzw. verkleinert wird, indem ein mit einem Ende des Balgs 9 dichtend verbundener Kolben 14 in die Spindel hineingeschraubt bzw. aus ihr heraus gedreht wird.

Der im Boden des Gehäuses 15 mit seinem anderen Ende verankerte Balg 9 ist von einer Hülse 16 umgeben, auf deren unterem Endflansch eine Uebenwegfeder 17 aufliegt, die in ihrem anderen Ende an einem im Gehäuse 15 gehaltenen Sprengring abgestützt ist. Tritt in dem Ausdehnungssystem ein zu hoher Druck auf, so wird diese Hülse zusammen mit der Spindel 19 und dem Verstellknopf 13 gegen die Kraft der Feder 17 aus dem Gehäuse 15 herausgedrückt und so eine Ueberlastung des flüssigkeitsgefüllten Systems vermieden.

Vom Volumen 12 der Sollwert-Einstellvorrichtung 1 aus führt die Kapillarleitung 10 zu dem an geeigneter Stelle in dem zu überwachenden Raum mittels eines Fühlerträgers angebrachten Ausdehnungstemperaturfühlers, bei dem es sich um ein handelsübliches Produkt handelt. Weiterhin verbinden die Kapillarleitungen 11 das Volumen 12 mit den Arbeitselementen 7 der beiden Ventile 3 und 3'. Die Leitungen 11 enden dabei in je einem weiteren Volumen 21, das durch die Metallbälge 8 begrenzt ist. Der Balg 8 ist als Antriebselement im Inneren eines Zwischenkörpers oder Steuerkolbens 22 angeordnet, der in einem Gehäuse 23, beim Heizventil 3 gegen die Kraft einer Feder 24 horizontal verschiebbar ist; statt mit der Feder 24 ist das Kühlventil 3', das in Sequenz zum Ventil 3 betrieben wird, wobei in einem mittleren Temperaturbereich zwischen beiden Steuer- bzw. Oeffnungsbereichen der Ventile eine Totzone vorhanden ist, in der beide Ventile geschlossen sind, mit einer in ihrer Federkraft wesentlich stärkeren Totwegfeder 39 ausgerüstet. Diese Feder 39 gewährleistet, dass in dem immer eine gewisse Elastizität aufweisenden Signal- oder Steuersystem das Kühlventil 3' erst bei einem merklich höheren Druck — d. h. bei einer wesentlich höheren Temperatur — öffnet, als das Heizventil 3 schliesst.

Die Federn 24 und 39 stützen sich dabei auf einer ebenfalls verschiebbaren Grundplatte 25 ab, deren Lage im Gehäuse 23 mit Hilfe eines Werkzeugs einstellbar sein kann, so dass beispielsweise die Vorspannung der Rückstellfeder 39 und damit der Totbereich in der Sequenz der Bewegungen beider Ventile 3 und 3' einstellbar werden.

An seiner linken Seite ist jedes Gehäuse 23 durch einen von einem Sprengring 27 gehaltenen Deckel 28 abgeschlossen, in dem eine Ausnehmung 30 zur Aufnahme der zum Volumen 21 im Balg 8 führenden Kapillarleitungen 11 dient.

Die äussere Mantelfläche 31 der für beide Ventile 3 und 3' gleichen Zwischenkörper 22 weist ein Profile auf, das in dem gezeigten Beispiel in einer ringförmigen, im Querschnitt wannenartigen Ausnehmung 32 besteht. Das Profil dieser Ausnehmung 32 bildet Steuerkanten, gegen die von den Rückstellfedern 24 bzw. 39 des jeweiligen Ventils 3 bzw. 3' über eine Spindel 33 eine Kugel 34 gedrückt wird; diese ist — in axialer Richtung des Zwischenkörpers 22 spielfrei — in einer Bohrung 35 des Gehäuses 23 gelagert, wobei die Toleranzen zwischen Kugel 34 und Bohrung 35 beispielsweise 1/100 mm betragen. Die Kugel 34 bildet das Uebertragungselement, durch das eine temperaturabhängige Horizontalverschiebung des Zwischenkörpers 22 in einen entsprechend vom Profil der Mantelfläche 31 gesteuerten Hub des Ventils 3 bzw. 3' umgesetzt wird.

Die Gehäusebohrung 35 ist von einem ringförmigen Ansatz 36 umgeben, der in einzelnen, elastisch spreizbaren Füssen endet. Mit diesem Ansatz 36 wird das Gehäuse 23 auf dem Gehäuse des Ventils 3 befestigt, wobei die einzelnen Füsse über den oberen Rand des Ventilgehäuses geschoben werden und in einer aussen umlaufenden Ringnut 37 dieses Gehäuses einrasten. Ueber die Füsse des vorzugsweise aus Kunststoff bestehenden Ansatzes 36 wird nach der Montage des Gehäuses 23 auf dem Ventilgehäuse abschliessend ein Sicherungsring 38 geschoben.

Da eine Temperaturerhöhung, d.h. eine Ausdehnung der Flüssigkeit bei einem Kühlventil, ein Oeffnen bzw. eine Vergrösserung der Oeffnung bewirken muss, während beim Heizventil dieser Signalrichtung eine Schliessbewegung zugeordnet ist, ist das wannenartige Profil der Ausnehmung 32 im Mantel 31 des Zwischenkörpers 22 so bemessen und so auggebildet, dass bei dem Heizventil die von der Rückstellfeder 24 abgewandte Kante 40 als Steuerkante benutzt wird, während beim Kühlventil — wegen der erheblich grösseren Federkraft der Totwegfeder 39 — die dieser Feder zugewandte Kante 41 das Oeffnen und Schliessen des Ventils 3' steuert. Auf diese Weise können mit der erfindungsgemässen Konstruktion beide beschriebenen unterschiedlichen Funktionen mit völlig identischen Teilen realisiert werden, wenn man von dem Ersatz einer Rückstellfeder 24 durch die kräftigere Totwegfeder 39 absieht. Für die Serienfabrikation und die Lagerhaltung ergeben sich daraus erhebliche Vorteile.

Unter Umständen ist es jedoch möglich, den Totweg zwischen dem Heiz- 3 und dem Kühlventil 3' durch eine individuelle Nachbearbeitung von einem der beiden Profile der serienmässig an sich identischen Zwischenkörper 22 in der Art zu ergänzen, dass das Oeffnen des Kühlventils erst nach einem längeren Weg des Zwischenkörpers erfolgt als das Schliessen des Heizventils.

## Patentanspruch

Thermostatische Regelanordnung für die Steuerung des Durchflusses eines Heiz- oder eines Kühlmediums durch einen Wärmetauscher für die Temperierung eines Raumes, bei der mindestens ein Heiz- und ein Kühlventil gemeinsam an einen Ausdehnungs-Temperaturfühler und eine Sollwert-Einstellvorrichtung angeschlossen sind, wobei eine, als Ausdehnungsmedium dienende Flüssigkeit in jedem Ventil gegen die Kraft einer Rückstellfeder über einen verschiebbaren Zwischenkörper auf die den Ventilkörper tragende Spindel einwirkt, und wobei ferner die Rückstellfeder des Kühlventils gegenüber derjenigen des Heizventils eine unterschiedliche Stärke hat, dadurch gekennzeichnet, dass Heizventil (3) und Kühlventil (3') abgesehen von den Rückstellfedern (24 bzw. 39) gleich aufgebaut sind, und dass ferner der sich rechtwinklig zur Ventilspindel (33) bewegende Zwischenkörper (22) eine in Bewegungsrichtung wannenartig profilierte Mantelfläche (31) mit zwei entgegengesetzt wirkenden schrägen Steuerkanten hat, die über einen Rollkörper die Stellung des Ventilkörpers steuern, wobei der Abstand der Steuerkanten grösser als der Durchmesser des Rollkörpers (34) ist, und der Rollkörper (34) in axialer Richtung des Zwischenkörpers (22) mindestens nahezu spielfrei gelagert ist.

## Claim

A thermostatic regulating device for controlling the flow of a heating or cooling medium through a heat exchanger for controlling the temperature of a room, in which at least one heating and one cooling valve are connected to a common expansion temperature sensor and a set-value adjusting device, a liquid serving as the expansion medium in each valve acting against the force of a return spring via a movable intermediate member on the spindle bearing the valve member and the return spring of the cooling valve having a different strength from the spring of the heating valve, characterised in that the heating valve (3) and cooling valve (3') are of identical construction, apart from the return springs (24 and 39), and the intermediate member (22) moving at right angles to the valve spindle (33) has a surface (31) having a trough-like cross-section in the direction of motion and two oblique control edges operating in opposite directions and controlling the position of the valve member via a roller member, the distance between the control edges being greater than the diameter of the roller member (34) and the roller member (34) being mounted substantially without clearance in the axial direction of the intermediate member (22).

## Revendication

Dispositif de régulation thermostatique pour la commande de la circulation d'un fluide de chauffage ou de refroidissement à travers un échangeur de chaleur pour la surveillance en température d'une pièce, dans lequel au moins une soupape de chauffage et une soupape de refroidissement sont reliées en commun à un détecteur de température de dilatation et à un dispositif de réglage d'une valeur de consigne, un liquide servant de fluide de dilatation agissant alors dans chaque soupape contre la force d'un ressort de rappel par un corps intermédiaire déplaçable sur l'axe supportant le corps de la soupape, et le ressort de rappel de la soupape de refroidissement ayant une force différente de celle du ressort de la soupape de chauffage, dispositif de régulation caractérisé en ce que la soupape de chauffage (3) et la soupape de refroidissement (3') sont réalisées identiquement, à part les ressorts de rappel (24 ou 39) et en ce que le corps intermédiaire (22) se déplaçant à angle droit par rapport à l'axe de soupape (33) comporte une surface enveloppe (31) profilée en forme de cuve dans le sens du mouvement et comprenant deux bords de commande inclinés agissant en sens opposés qui commandent par l'intermédiaire d'un galet la position du corps de soupape, la distance entre les bords de commande étant plus importante que le diamètre du galet (34) et le galet (34) étant monté au moins approximativement sans jeu dans le sens axial du corps intermédiaire (22).